# EUROPEAN PATENT SPECIFICATION

(11) **EP 0 682 189 B1**
(45) Date of publication and mention of the grant of the patent: **29.10.1997**
(21) Application number: 95105533.4
(22) Date of filing: 12.04.1995
(51) Int. Cl.: F16D 3/18, F16D 3/00, F16D 3/56

(54) **Flexible gear coupling**
Elastische Zahnradkupplung
Accouplement flexible à engrenages

(30) Priority: 15.04.1994 JP 77252/94
(43) Date of publication of application: 15.11.1995
(73) Proprietor: MITSUBISHI DENKI KABUSHIKI KAISHA, Tokyo 100 (JP)
(72) Inventor: Shigeura, Junichi, c/o Mitsubishi Denki K.K., Amagasaki-shi, Hyogo 661 (JP)
(74) Representative: Sajda, Wolf E., Dipl.-Phys.

(56) References cited:
- EP-A- 0 457 711
- BE-A- 546 119
- DE-B- 1 089 592
- FR-A- 725 853
- FR-A- 1 218 011
- FR-A- 2 356 047
- GB-A- 848 178
- GB-A- 895 731
- US-A- 3 402 572

## Description

### BACKGROUND OF THE INVENTION

The present invention relates to a flexible gear coupling capable of coupling a drive motor of a railway vehicle with a reduction gear unit.

A drive motor of a railway vehicle is disposed on a bogie frame and a reduction gear unit is disposed to an axle shaft. Therefore, the axial line of the output shaft of the motor is dislocated from that of the pinion shaft of the gear unit by the vibration of a body when the railway vehicle travels. Since a power must be smoothly delivered between both shafts even in the dislocated state, the motor is coupled with the gear unit through a flexible gear coupling.

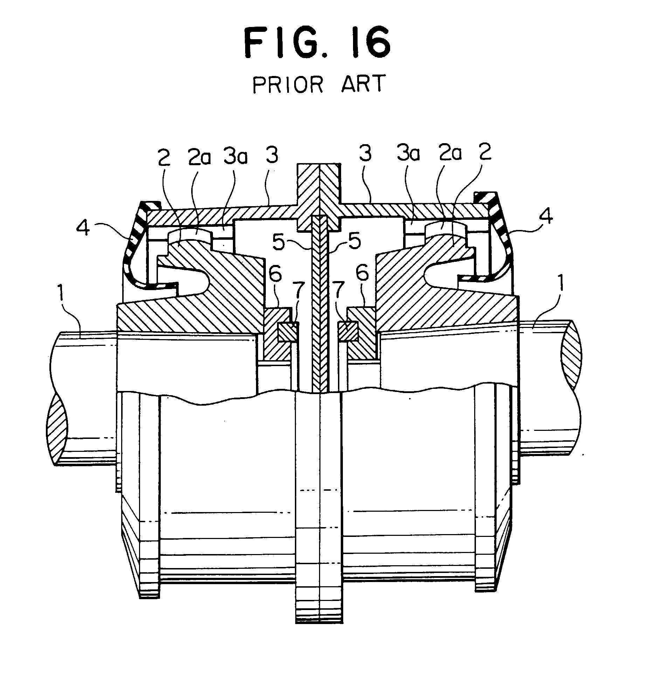

FIG. 16 is a front elevational view, partly in cross section, of a conventional flexible gear coupling disclosed in, for example, Japanese Utility Model Publication No. 47-14804. In FIG. 16, numeral 1 denotes rotary shafts with one of them serving as, for example, the output shaft of a drive motor and the other of them serving as the input shaft to a reduction gear unit. Numeral 2 denotes pinions each fixed to the rotary shaft 1 and an external gear having crown teeth 2a is formed to each of the pinions 2. Numeral 3 denotes sleeves fixed to each other by bolts or the like and each sleeve 3 has the teeth 3a of an internal gear to be meshed with the teeth 2a of the pinion 2. Note, the vicinity of the portion where both gears 2a and 3a in the sleeves 3 are meshed each other is filled with grease as a lubricant.

Numeral 4 denotes end covers each fixed to the sleeve 3 to prevent the splashing of the grease in the sleeve 3. Numeral 5 denotes center plates each partitioning the interior of the sleeve 3, numeral 6 denotes shaft end nuts to prevent the pinions 2 from dropping off the rotary shafts 1. Numeral 7 denotes cushions to prevent the shaft end nuts 6 from being abutted against the center plates 5 and damaging them.

As described above, the conventional flexible gear coupling is arranged symmetric with respect to the center plates 5 in the right to left direction.

Since the conventional flexible gear coupling is arranged as described above, even if the axial line of the output shaft of the motor is dislocated from that of the pinion shaft of the gear unit by the vibration of the body when the railway vehicle travels, a drive force can be smoothly transmitted from one of the rotary shafts 1 to the other of them because the teeth 2a of the external gears of the pinions 2 are crowed. Further, even if both rotary shafts 1 are dislocated in an axial direction, the teeth 2a of the external gears 2 of the pinions 2 are allowed to freely move along the grooves of the teeth 3a of the internal gear in the sleeves 3.

Since the conventional flexible gear coupling is arranged as described above, although the rigidity in a torsional direction of the rotary shafts is greatly increased, it is difficult to reduce a torsional vibration. As a result, an impact torque is transmitted from a driving side rotary shaft such as a motor and the like to a driven side rotary shaft such as a gear unit and the like. In addition, a problem also arises in that a torsional vibration of a drive system is induced by a spring effect resulting from the deflection of teeth.

### SUMMARY OF THE INVENTION

Accordingly, an object of the present invention made to solve the above problems is to provide a flexible gear coupling capable of absorbing an impact torque and suppressing the occurrence of a torsional vibration.

According to the present invention, a flexible gear coupling is arranged such that a pair of first external gears provided with a pair of pinions are crowned in order that when a pair of first internal gears disposed along the same axis of sleeves are meshed with the fist external gears, the first external gears can move in the axial direction of the first internal gears by a predetermined amount as well as incline toward the axial direction of the first internal gears at a predetermined angle, a lubricant is filled in the vicinity of the portion where the first internal gears are meshed with the first external gears, and a rotational force is transmitted from a first rotary shaft fixed to one of the pinions to a second rotary shaft fixed to the other of the pinions, second internal gears having the predetermined number of first teeth are formed on the inside peripheries of the respective pinions, a pair of bosses are disposed to which second external gears having second teeth confronting the first teeth of the second internal gears are formed at a predetermined gap and to which the respective rotary shafts are fixed, and elastic bodies are interposed between the first teeth and the second teeth.

The second internal gears and the second external gears may have splines having trapezoid teeth or rectangular teeth.

According to the present invention, a slit having a predetermined depth may be defined to at least one of the first teeth of the second internal gears and the second teeth of the second external gears from the distal end of each of the teeth of the external gears toward the bottom of each of the teeth in the tooth width direction thereof.

Also, a predetermined gap may be defined between the distal end of each of the second teeth of the second external gears and each of the tooth grooves of the first teeth of the second internal gears and elastic bodies are integrally filled between the first teeth and the second teeth and between the distal ends of the second teeth and the tooth grooves of the first teeth in any of claim 1 to claim 3.

Grooves may also be defined to make the distal ends of the second teeth of the external gears discontinuous in the tooth width direction thereof and elastic bodies are integrally filled between the first teeth of the second internal gears and the second teeth and in the grooves.

According to another aspect of the present invention, a predetermined gap is defined between the tooth groove of each of the second teeth of the second external gears and each of the distal ends of the first teeth of the second internal gears and elastic bodies are integrally filled between the first teeth and the second teeth and between the tooth grooves of the second teeth and the distal ends of the first teeth. Grooves may be defined to make the distal ends of the first teeth of the second internal gears discontinuous in the tooth width direction thereof and elastic bodies are integrally filled between the second teeth of the second external gears and the first gears and in the grooves.

According to another aspect of the present invention, a flexible gear coupling may be arranged such that a pair of first external gears provided with a pair of pinions, respectively are crowned in order to that when a pair of first internal gears provided with a pair of sleeves, respectively are meshed with the fist external gears, the first external gears can move in the axial direction of the first internal gears by a predetermined amount as well as incline toward the axial direction of the first internal gears at a predetermined angle, a lubricant is filled in the vicinity of the portion where the first internal gears are meshed with the first external gears, and a rotational force is transmitted from a first rotary shaft on the side of one of the pinions to a second rotary shaft on the side of the other of the pinions, flanges, to which second external gears having second teeth which confront the first teeth of the internal gears at a predetermined gap are formed, are interposed between both sleeves and elastic bodies are interposed between the fist teeth and the second teeth. Slit having a predetermined depth may be defined from the distal end of each of the teeth of the second external gears toward the bottom of each of the teeth of the second external gears in the tooth width direction thereof. The elastic bodies may be composed of nitrile rubber having a hardness of 60 to 70. The elastic bodies may be composed of leaf springs.

According to the present invention, an impact torque and a torsional vibration applied to the rotary shafts are reduced by the elastic bodies interposed between the first teeth of the second internal gears formed to the inside peripheries of the pinions and the second teeth of the second external gears of the bosses.

Also, since the second internal gears and the second external gears may be formed to the splines having the trapezoid teeth or rectangular teeth and the elastic bodies are interposed between the respective teeth of both splines, an impact torque and a torsional vibration applied to the rotary shafts are reduced by the elastic bodies.

Also, since a slit having a predetermined depth may be defined to at least one of the first teeth of the second internal gears and the second teeth of the second external gears from the distal end of each of the teeth of the external gears toward the bottom of each of the teeth in the tooth width direction thereof, the teeth provided with the slits are deflected and operate in association with the elastic bodies to thereby absorb an impact torque and a torsional vibration from the rotary shafts and reduce the transmission of them to the pinions.

Also, the dropping off the elastic bodies can be prevented because the fixing between the pinions, the bosses and the elastic bodies and between the elastic bodies is rigidly carried out in such an arrangement that a predetermined gap is defined between the distal end of each of the second teeth of the second external gears and each of the tooth grooves of the first teeth of the second internal gears and the elastic bodies are integrally filled between the first teeth and the second teeth and between the distal ends of the second teeth and the tooth grooves of the first teeth.

The dropping off the elastic bodies can be prevented because the fixing between the pinions and bosses and between the elastic bodies is rigidly carried out in such an arrangement that grooves are defined to make the distal ends of the second teeth of the external gears discontinuous in the tooth width direction thereof and the elastic bodies are integrally filled between the first teeth of the second internal gears and the second teeth and in the grooves.

According to another aspect of the present invention, the dropping off the elastic bodies can be prevented because the fixing between the pinions and bosses and the elastic bodies and between the elastic bodies is rigidly carried out in such an arrangement that a predetermined gap is defined between the tooth groove of each of the second teeth of the second external gears and each of the distal ends of the first teeth of the second internal gears and the elastic bodies are integrally filled between the first teeth and the second teeth and between the tooth grooves of the second teeth and the distal ends of the first teeth.

Also, the dropping off the elastic bodies can be prevented because the fixing between the pinions and bosses and between the elastic bodies is rigidly carried out in such an arrangement that grooves are defined to make the distal ends of the first teeth of the second internal gears discontinuous in the tooth width direction thereof and the elastic bodies are integrally filled between the second teeth of the second external gears and the first gears and in the grooves.

Also, an impact torque and a torsional vibration which would otherwise be transmitted from one of the rotary shafts to the other thereof are absorbed by the elastic bodies interposed between the first teeth of the internal gears of the sleeves and the second teeth of the second external gears of the flanges.

Also according to the present invention, since a slit having a predetermined depth is defined from the distal end of each of the second teeth of the second external gears toward the bottom of each of the teeth in the tooth width direction thereof, the second teeth are deflected and operate in association with the elastic bodies so that the elastic bodies absorb an impact torque and a torsional vibration from one of the rotary shafts and prevent the transmission of them to the other of the rotary shafts.

Also, since the elastic bodies are composed of the nitrile rubber having a hardness of 60 to 70, the elastic bodies absorb an impact torque and a torsional vibration as well as improve a resistance against oil.

Also, since the elastic bodies are composed of the leaf springs, an impact torque and a torsional vibration applied to the rotary shafts can be reduced.

### BRIEF DESCRIPTION OF THE DRAWINGS

The present invention will become more readily apparent from the following detailed description of the preferred embodiments taken in conjunction with the accompanying drawings, in which:
FIG. 1 is a cross sectional view showing the main portion of an embodiment 1 of the present invention;
FIG. 2 is a side elevational the view observed along the line II - II of FIG. 1;
FIG. 3 is a cross sectional view showing the main portion of an embodiment 2 of the present invention;
FIG. 4 is a side elevational the view observed along the line IV - IV of FIG. 3;
FIG. 5 is a cross sectional view showing the main portion of an embodiment 3 of the present invention;
FIG. 6 is a side elevational the view observed along the line VI - VI of FIG. 5;
FIG. 7 is a cross sectional view showing the main portion of an embodiment 4 of the present invention;
FIG. 8 is a side elevational the view observed along the line VIII - VIII of FIG. 7;
FIG. 9 is a cross sectional view showing the main portion of an embodiment 5 of the present invention;
FIG. 10 is a side elevational the view observed along the line X - X of FIG. 9;
FIG. 11 is a cross sectional view showing the main portion of an embodiment 6 of the present invention;
FIG. 12 is a side elevational the view observed along the line XII - XII of FIG. 11;
FIG. 13 is a cross sectional view showing the main portion of an embodiment 7 of the present invention;
FIG. 14 is a side elevational the view observed along the line XIV - XIV of FIG. 13;
FIG. 15 is a cross sectional view taken along the line XV - XV of FIG. 13; and
FIG. 16 is a front elevational view, partly in cross section, of a conventional flexible gear coupling;

### DESCRIPTION OF THE PREFERRED EMBODIMENTS

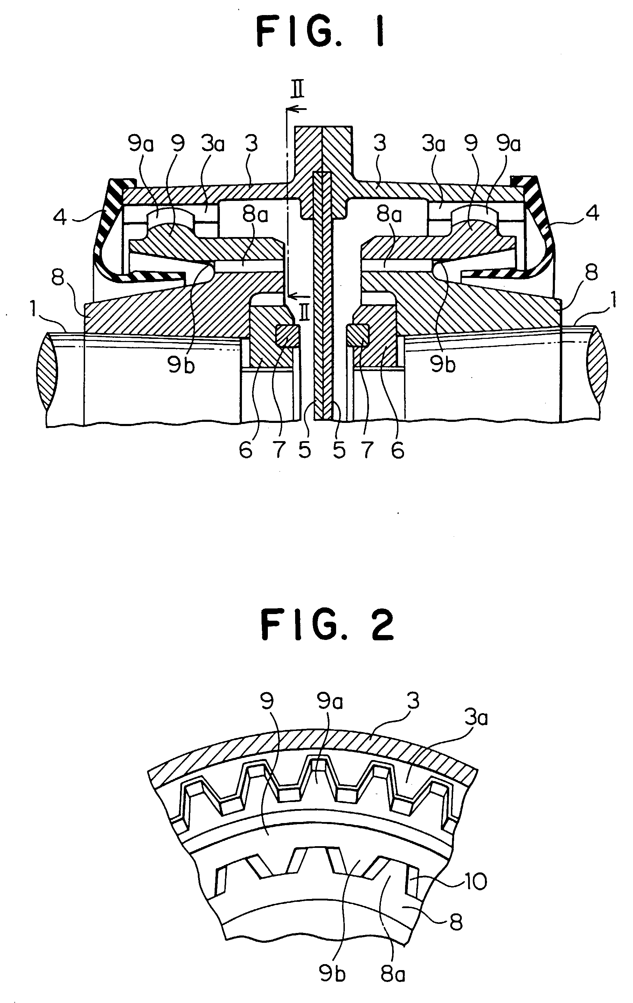

FIG. 1 is a cross sectional view showing the main portion of an embodiment 1 of the present invention and FIG. 2 is a side elevational view of the main portion observed along the line II - II of FIG. 1. In FIGS. 1 and 2, numerals 1 and 3 to 7 denote the same components as those of prior art. Numeral 8 denotes bosses fixed to the rotary shafts 1 and the predetermined number of teeth 8a of a spline are formed to the outside periphery of each of the bosses on the side of the center plates 5. Numeral 9 denotes pinions each having the crown teeth 9a of an external gear formed thereto which are meshed with the teeth 3a of the internal gear of the sleeve 3, and teeth 9b are formed to the inside periphery of the pinion 9 and confront the teeth 8a of the spline of the boss 8 at a predetermined gap. Numeral 10 denotes elastic bodies interposed between the teeth 8a of the bosses and the teeth 9b of the pinions 9 and having a predetermined hardness.

The elastic bodies 10 are composed of nitrile rubber or the like having a hardness of, for example, 60 to 70. The hardness of the nitrile rubber is suitably selected in accordance with the object of the elastic bodies 10.

Further, the elastic bodies 10 may be composed of silicon rubber, urethane rubber, fluorine rubber, ethylene propylene rubber, oil containing plastic, ethylene butadiene rubber, polyamide synthesized polymer, polytetrafluoroethylene and the like, in addition to the above nitrile rubber. A metal leaf spring may be also used.

In the above arrangement, each of the sleeves 3 can be freely moved in an axial direction in such a manner that the teeth 9a of the external gear of the pinion 9 moves in the grooves of the teeth 3a of the internal gear of the sleeve 3 in a predetermined range. An amount of the movement is regulated by the gap between the center plate 5 and the

Since the teeth 9a of the pinion 9 are crowned, the pinion 9 can transmit a rotational force while freely inclining within a predetermined angle with respect to the axial direction of the sleeve 3.

Further, since the elastic bodies 10 are interposed between the teeth 8a of the bosses 8 and the teeth 9b of the pinions 9, the transmission of an impact torque and a torsional vibration from the rotary shafts 1 to the pinions 9 side is reduced.

For example, although the conventional flexible gear coupling has a torsional rigidity of 6,800 kgf·m/deg between one of the rotary shafts 1 and the other of them, when nitrile rubber having a hardness of, for example, 60 is used as the elastic bodies between the teeth 8a of the splines of the bosses 8 and the teeth 9b of the pinions 9 as in the above embodiment 1, the torsional rigidity is reduced to 640 kgf·m/deg.

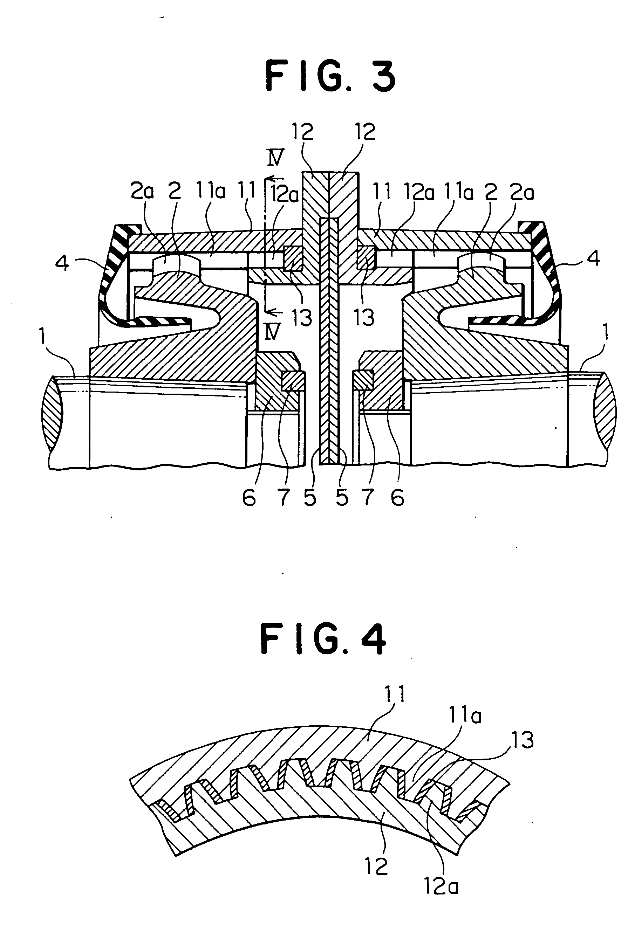

FIG. 3 is a cross sectional view showing the main portion of an embodiment 2 of the present invention and FIG. 4 is a cross sectional view observed along the line IV - IV of FIG. 3. In FIGS. 3 and 4, numerals 1, 2 and 4 to 7 denote the same components as those of prior art. Numeral 11 denotes sleeves each having teeth 11a of an internal gear formed thereto which meshed with the teeth 2a of the pinion 2 and numeral 12 denotes flanges interposed between both sleeves 11 and each of the flanges has teeth 12a formed thereto and confronting the teeth 11a of the sleeve 11 at a predetermined gap. Numeral 13 denotes elastic bodies interposed between the teeth 11a of the sleeves 11 and the teeth 12a of the flanges 12 and has a predetermined hardness.

The elastic bodies 13 is composed of nitrile rubber or the like having a hardness of 60 to 70. The hardness of the nitrile rubber is suitably selected in accordance with the object of the elastic bodies 13.

Further, the elastic bodies 13 may be composed of silicon rubber, urethane rubber, fluorine rubber, ethylene propylene rubber, oil containing plastic, ethylene butadiene rubber, polyamide synthesized polymer, polytetrafluoroethylene and the like, in addition to the above nitrile rubber. A metal leaf spring may be also used.

In the above arrangement, each of the sleeves 11 can be freely moved in an axial direction in such a manner that the teeth 2a of the external gear of the pinion 2 moves in the grooves of the teeth 11a of the internal gear of the of the sleeve 11 in a predetermined range. An amount of the movement is regulated by the gap between the center plate 5 and the cushion 7.

Since the teeth 2a of the pinion 2 are crowned, the pinion 2 can transmit a rotational force while freely inclining within a predetermined angle with respect to the axial direction of the sleeve 11.

Further, since the elastic bodies 13 are interposed between the teeth 11a of the sleeves 11 and the teeth 12a of the flanges 12, the transmission of an impact torque and a torsional vibration from one of the rotary shafts 1 to the other of them is reduced.

For example, although the conventional flexible gear coupling has a torsional rigidity of 6,800 kgf·m/deg between one of the rotary shafts 1 and the other of them, when nitrile rubber having a hardness of, for example, 60 is used as the elastic bodies between the teeth 11a of the sleeves 11 and the teeth 12a of the flanges 12 as in the above embodiment 1, the torsional rigidity is reduced to 640 kgf·m/deg.

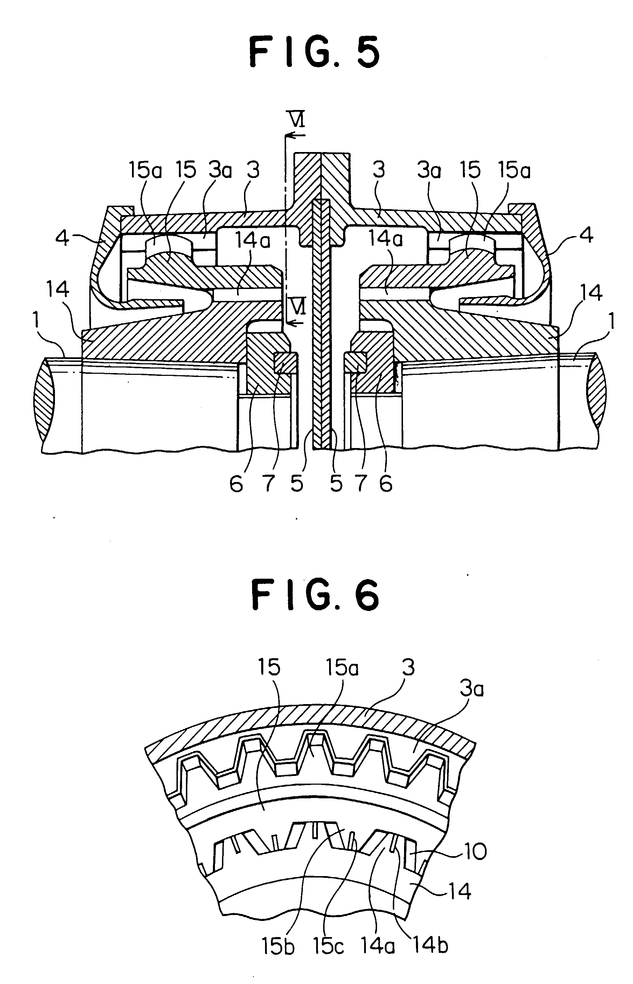

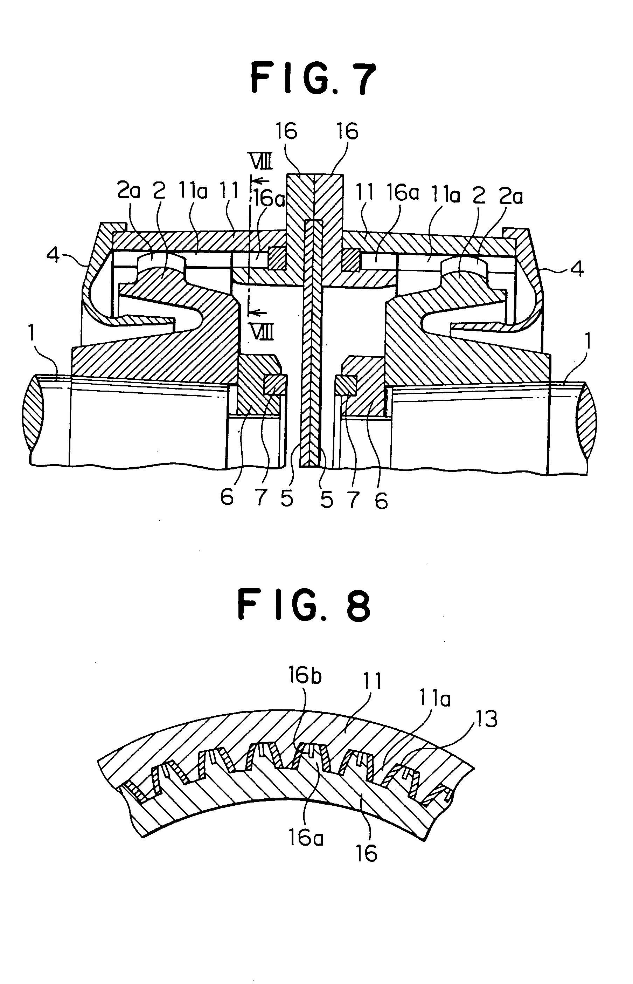

FIG. 5 is a cross sectional view showing the main portion of an embodiment 13. FIG. 6 is a side elevational view of the main portion observed along the line VI - VI of FIG. 5. In FIGS. 5 and 6, numerals 1 and 3 to 7 denote the same components as those of prior art. Numeral 14 denotes bosses fixed to the rotary shafts 1 and the predetermined number of teeth 14a of a spline are formed to the outside periphery of each of the bosses on the side of the center plates 5. A slit 14b having a predetermined width is defined from the distal end to the bottom of each tooth 14a in the tooth width direction thereof. When the distal end of the tooth has a thickness of, for example, 3 mm, the slit 14b has a width set to about 1 mm and the depth thereof is suitably determined.

Numeral 15 denotes pinions each having the crown teeth 15a of an external gear formed thereto which are meshed with the teeth 3a of the internal gear of the sleeve 3, and teeth 15b are formed to the inside periphery of the pinion 9 and confront the teeth 14a of the spline of the boss 14 at a predetermined interval. A slit 15c having a predetermined width is defined from the distal end to the bottom of each tooth 15a. The slit 15c has the same width and depth as those of the slit 14b.

As described above, since the respective teeth 14a and 14b are also deflected by the provision of the slits 14b and 15c with the teeth 14a of the external gear of the bosses 14 and the teeth 15b of the internal gear of the pinions 15, the operation of the slits 14b and 15c further reduces the transmission of an impact torque and a torsion vibration from the rotary shafts 1 to the pinions 15 in association with the operation of the elastic bodies 10.

Although FIG. 5 and FIG. 6 describe a case that the slits 15c are defined to the teeth 15b of the pinions 15 and the slits 14c are defined to the external gears 14a of the bosses 14, the transmission of an impact torque and a torsion vibration from the rotary shafts 1 to the pinions 15 can be effectively reduced by the operation of the slits in association with the operation of the elastic bodies 10 even if they are only the slits 15c on the pinions 15 side or the slits 14b on the bosses 14 side.

FIG. 7 is a cross sectional view showing the main portion of an embodiment 4. FIG. 8 is a side elevational view of the main portion observed along the line VIII - VIII of FIG. 7. In FIGS. 7 and 8, numerals 1, 2 and 4 to 7 denote the same components as those of prior art. Numeral 16 denotes flanges interposed between both sleeves 11 and each of the flanges has teeth 16a formed thereto and confronting the teeth 11a of the sleeve 11 at a predetermined gap. A slit 16b having a predetermined width is defined from the distal end to the bottom of each tooth 16a. Note, the tooth 16a may be formed to any shape such as an involute tooth shape or a spline tooth shape.

Since the teeth 16a are deflected by the aforesaid arrangement, the operation of the teeth 16a in association with the operation of elastic bodies 10 effectively reduces the transmission of an impact torque and a torsion vibration from the rotary shafts 1 to the pinions 15.

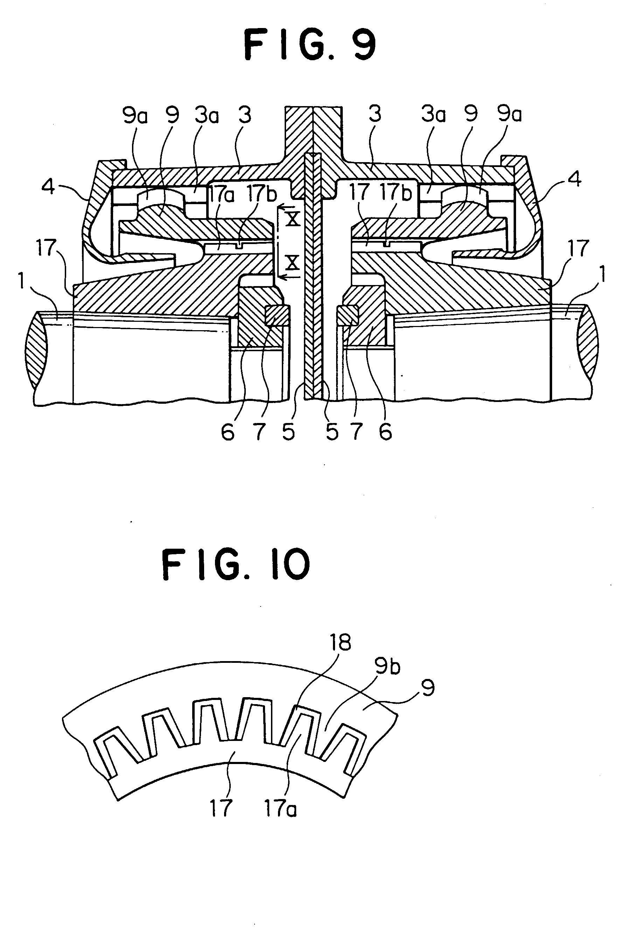

FIG. 9 is a cross sectional view showing the main portion of an embodiment 5. FIG. 10 is a side elevational view observed along the line X - X of FIG. 9. In FIG. 9 and FIG. 10, numeral 17 denotes bosses fixed to rotary shafts 1 and the predetermined number of teeth 17a of a spline are formed to the outside periphery of each of the bosses on the side of center plates 5 and a predetermined gap is defined between the distal end of each of the teeth and each of the tooth grooves on the side of pinions. Further, one or a plurality of grooves 17b are defined to each of the teeth 17a to make the distal end thereof discontinuous in a tooth width direction. Numeral 18 denotes elastic bodies having a predetermined hardness and integrally filled into the space between the teeth 17a of the bosses 17 and the teeth 9b of the pinions 9 and the space between the grooves 17b, the distal ends of the teeth of the bosses and the tooth groves of the pinions 9. Note, the distal ends of the teeth of the bosses 17 can be rigidly fixed to the tooth grooves of the pinions 9 only by the elastic bodies 18 disposed therebetween even if the grooves 17b are not defined.

As described above, since the elastic bodies 18 are interposed between the teeth 17a and the teeth 9b and between the grooves 17b, the distal ends of the teeth of the bosses 17 and the tooth groves of the pinions 6, the transmission of an impact torque and a torsion vibration from the rotary shafts 1 to the pinions 9 is reduced. Further, since the elastic bodies 18 are integrally formed, the space between the pinions 9 and the bosses 17 and the spaces between the elastic bodies 18 can be rigidly fixed and dropping off thereof can be prevented.

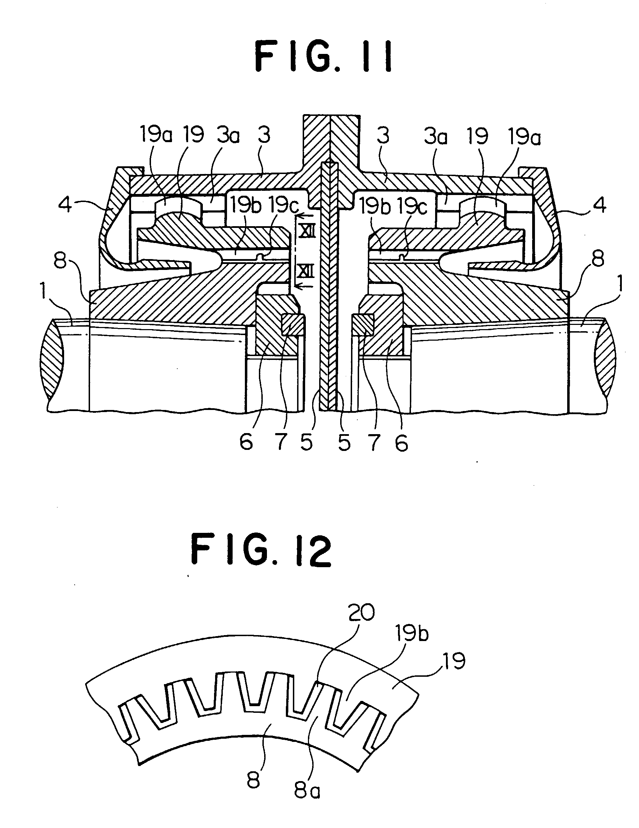

FIG. 11 is a cross sectional view showing the main portion of an embodiment 6. FIG. 12 is a side elevational view observed along the line XII - XII of FIG. 11. In FIG. 11 and FIG. 12, numeral 19 denotes pinions each having the crown teeth 19a of an external gear formed thereto which are meshed with the teeth 3a of the internal gear of a sleeve 3, teeth 19b are formed to the inside periphery of the pinion 9 and confront the teeth 8a of the spline of a boss 8 at a predetermined gap, and a predetermined gap is defined between the distal end of each tooth and each of the tooth groove of the bosses 8. Further, one or a plurality of grooves 19c are defined to each of the teeth 19b to make the tooth width direction thereof discontinuous. Numeral 20 denotes elastic bodies having a predetermined hardness and integrally filled into the space between the teeth 8a of the bosses 8 and the teeth 19b of the pinions 19 and the space between the grooves 19c, the tooth grooves of the bosses 8 and the distal ends of the pinions 19. Note, the tooth grooves of the bosses 17 can be rigidly fixed to the distal ends of the teeth of the pinions 9 only by the elastic bodies 20 interposed therebetween even if the grooves 19c are not defined.

As described above, since the elastic bodies 20 are interposed also between the teeth 8a and the teeth 19b and between the grooves 19c, the tooth grooves of the bosses 17 and the distal ends of the teeth of the pinions 6, the transmission of an impact torque and a torsion vibration from the rotary shafts 1 to the pinions 19 is reduced. Further, since the elastic bodies 20 are integrally formed, the space between the pinions 19 and the bosses 8 and the space between the elastic bodies 20 can be rigidly fixed and dropping off thereof is prevented.

Note, as described in the embodiment 1, nitrile rubber or the like having a hardness from 60 to 70 or the like is used as the elastic bodies 13, 18 and 20 shown in the embodiment 4 to the embodiment 6. The hardness of the nitrile rubber is suitably selected in accordance with the object of the elastic bodies.

Further, the elastic bodies 13, 18 and 20 may be composed of silicon rubber, urethane rubber, fluorine rubber, ethylene propylene rubber, oil containing plastic, ethylene butadiene rubber, polyamide synthesized polymer, polytetrafluoroethylene and the like, in addition to the above nitrile rubber. A metal leaf spring may be also used.

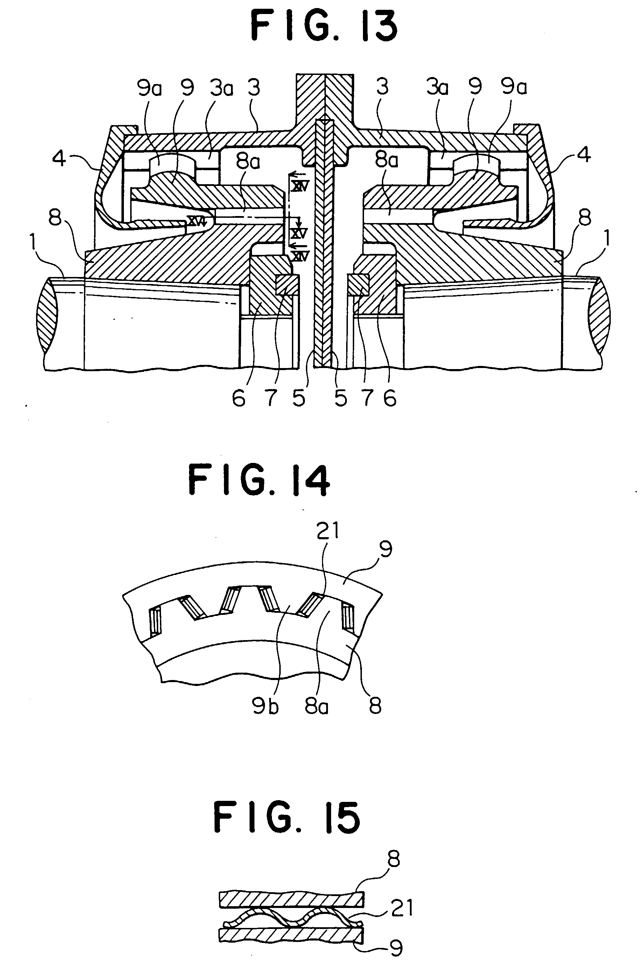

FIG. 13 is a cross sectional view showing the main portion of an embodiment 7. FIG. 14 is a side elevational view observed along the line XIV - XIV of FIG. 13. FIG. 15 is a cross sectional view observed along the line XV - XV of FIG. 13. In FIG. 13 - FIG. 15, numeral 21 denotes leaf springs interposed between the teeth 8a of bosses 8 and the teeth 9b of pinions 9 and have a strength determined in accordance with a transmission force between rotary shafts 1, an amount of deflection and the like.

As described above, since the leaf springs are interposed between the teeth 8a of the bosses 8 and the teeth 9b of the pinions 9, the transmission of an impact torque and a torsional vibration from the rotary shafts 1 to the pinions 9 is reduced.

Although the teeth 8a and 9b shown in FIG. 1 and FIG. 2 of the embodiment 1, the teeth 14a and 15b shown in FIG. 5 and FIG. 6 of the embodiment 3, the teeth 9b and 17a shown in FIG. 9 and FIG. 10 of the embodiment 5, the teeth 8a and 19b shown in FIG. 11 and FIG. 12 of the embodiment 6, and the teeth 8a and 9b shown in FIG. 13 - FIG. 15 of the embodiment 7 are formed to the splines having trapezoid teeth or rectangular teeth, the same advantage can be expected even if the respective teeth are arranged as involute teeth.

As has been described, according to the present invention, an impact torque and a torsional vibration applied to the rotary shafts can be reduced by the elastic bodies interposed between the first teeth of the second internal gears formed on the inside peripheries of the pinions and the second teeth of the external gears of the bosses.

Also, since the second internal gears and the second external gears are formed to the splines having the trapezoid teeth or rectangular teeth and the elastic bodies are interposed between the respective teeth of both splines, an impact torque and a torsional vibration applied to the rotary shafts can be reduced by the elastic bodies.

Also, since a slit having a predetermined depth is defined to at least one of the first teeth of the second internal gears and the second teeth of the second external gear from the distal end of each of the teeth of the external gears toward the bottom of each of the teeth in the tooth width direction thereof, the teeth provided with the slits are deflected and operate in association with the elastic bodies to thereby enable an impact torque and a torsional vibration from the rotary shafts to be absorbed and the transmission of them to the pinions to be reduced.

According to another aspect of the present invention, an impact torque and a torsional vibration from the rotary shafts can be absorbed and the transmission of them to the pinions can be reduced in such an arrangement that a predetermined gap is defined between the distal end of each of the second teeth of the second external gears and each of the tooth grooves of the first teeth of the second internal gears and the elastic bodies are integrally filled between the first teeth and the second teeth and between the distal ends of the second teeth and the tooth grooves of the first teeth. Further, since the dropping off the elastic bodies can be prevented because the fixing between the pinions and bosses and the elastic bodies and between the elastic bodies is rigidly carried out.

Also, an impact torque and a torsional vibration from the rotary shafts can be absorbed and the transmission of them to the pinions can be reduced in such an arrangement that grooves are defined to make the distal ends of the second teeth of the external gears discontinuous in the tooth width direction thereof and the elastic bodies are integrally filled between the first teeth of the second internal gears and the second teeth thereof and in the grooves in claim 4. Further, since the fixing between the pinions and bosses and between the elastic bodies are rigidly carried out, the dropping off the elastic bodies can be prevented.

According to another aspect of the present invention, an impact torque and a torsional vibration from the rotary shafts can be absorbed and the transmission of them to the pinions can be reduced in such an arrangement that a predetermined gap is defined between the tooth groove of each of the second teeth of the second external gears and each of the distal ends of the first teeth of the second internal gears and the elastic bodies are integrally filled between the first teeth and the second teeth and between the tooth grooves of the second teeth and the distal ends of the first teeth. Further, since the fixing between the pinions and bosses and the elastic bodies and between the elastic bodies are rigidly carried out, the dropping off the elastic bodies can be prevented.

Also, an impact torque and a torsional vibration from the rotary shafts can be absorbed and the transmission of them to the pinions can be reduced in such an arrangement that grooves are defined to make the distal ends of the first teeth of the second internal gears discontinuous in the tooth width direction thereof and the elastic bodies are integrally filled between the second teeth of the second external gears and the first gears and in the grooves in claim 6. Further, since the fixing between the pinions and bosses and between the elastic bodies are rigidly carried out, the dropping off the elastic bodies can be prevented.

An impact torque and a torsional vibration which would otherwise be transmitted from the from one of the rotary shafts to the other thereof can be absorbed by the elastic bodies which are interposed between the first teeth of the internal gears of the sleeves and the second teeth of the second external gears of the flanges.

Since a slit having a predetermined depth is defined from the distal end of each of the second teeth of the second external gears toward the bottom of each of the teeth in the tooth width direction thereof, the second teeth are deflected and operate in association with the elastic bodies so that the elastic bodies can absorb an impact torque and a torsional vibration from one of the rotary shafts and prevent the transmission of them to the other of the rotary shafts.

Since the elastic bodies are composed of the nitrile rubber having a hardness of 60 to 70, the elastic bodies can absorb an impact torque and a torsional vibration as well as improve a resistance against oil.

Also, since the elastic bodies are composed of the leaf springs, an impact torque and a torsional vibration applied to the rotary shafts can be reduced.

## Claims

1. A flexible gear coupling arranged such that a pair of first external gears (9a) provided with a pair of pinions (9) are crowned in order to that when a pair of first internal gears (3a) disposed along the same axis of sleeves (3) are meshed with the first external gears (9a), the first external gears (9a) can move in the axial direction of the first internal gears (3a) by a predetermined amount as well as incline toward the axial direction of the first internal gears (3a) at a predetermined angle, a lubricant is filled in the vicinity of the portion where the first internal gears (3a) are meshed with the first external gears (9a), and a rotational force is transmitted from a first rotary shaft (1) fixed to one of the pinions (9) to a second rotary shaft (1) fixed to the other of the pinions (9), characterized in that second internal gears having a predetermined number of first teeth (9b) are formed on the inside peripheries of the respective pinions (9), a pair of bosses (8) are disposed to which second external gears having second teeth (8a) confronting the first teeth (9b) of the second internal gears are formed at a predetermined gap and to which the respective rotary shafts (1) are fixed, and elastic bodies (10) are interposed between the first teeth (9b) and the second teeth (8a).

2. The flexible gear coupling according to claim 1,
characterized in that the second internal gears (9b) and the second external gears (8a) are splines having trapezoid teeth or rectangular teeth.

3. The flexible gear coupling according to claim 1 or 2,
characterized in that a slit (14b, 15c) having a predetermined depth is defined to at least one of the first teeth (14a) of the second internal gears and the second teeth (15a) of the second external gears from the distal end of each of the teeth (14a, 15a) of the external gears toward the bottom of each of the teeth in the tooth width direction thereof.

4. The flexible gear coupling according to any of claims 1 to 3,
characterized in that a predetermined gap is defined between the distal end of each of the second teeth (17a) of the second external gears and each of the tooth grooves of the first teeth (9b) of the second internal gears and elastic bodies (18) are integrally filled between the first teeth (9b) and the second teeth (17a) and between the distal ends of the second teeth (17a) and the tooth grooves of the first teeth.

5. The flexible gear coupling according to claim 4,
characterized in that grooves (17b) are defined to make the distal ends of the second teeth (17a) of the external gears discontinuous in the tooth width direction thereof and elastic bodies (18) are integrally filled between the first teeth (9b) of the second internal gears and the second teeth (17a) and in the grooves (17b).

6. The flexible gear coupling according to any of claims 1 to 3,
characterized in that a predetermined gap is defined between the tooth groove (19c) of each of the second teeth (19a) of the second external gears and each of the distal ends of the first teeth (8a) of the second internal gears and elastic bodies (20) are integrally filled between the first teeth (8a) and the second teeth (19a) and between the tooth grooves (19c) of the second teeth (19a) and the distal ends of the first teeth (8a).

7. The flexible gear coupling according to claim 6,
characterized in that grooves (19c) are defined to make the distal ends of the first teeth (19b) of the second internal gears discontinuous in the tooth width direction thereof and elastic bodies (20) are integrally filled between the second teeth (8a) of the second external gears and the first teeth (19b) and in the grooves (19c).

8. A flexible gear coupling arranged such that a pair of first external gears (2a) provided with a pair of pinions (2), respectively are crowned in order to that when a pair of first internal gears (11a) provided with a pair of sleeves (11), respectively are meshed with the first external gears (2a), the first external gears (2a) can move in the axial direction of the first internal gears (11a) by a predetermined amount as well as incline toward the axial direction of the first internal gears (11a) at a predetermined angle, a lubricant is filled in the vicinity of the portion where the first internal gears (11a) are meshed with the first external gears (2a), and a rotational force is transmitted from a first rotary shaft (1) on the side of one of the pinions (2) to a second rotary shaft (1) on the side of the other of the pinions (2), characterized in that flanges (12, 16) are provided, to which second external gears having second teeth (12a, 16a) which confront the first teeth (2a) of the internal gears (2) at a predetermined gap are formed, said flanges (12,16) being interposed between both the sleeves (11) and elastic bodies (13) are interposed between the first teeth (11a) and the second teeth (12a, 16a).

9. The flexible gear coupling according to claim 8,
characterized in that a slit (16b) having a predetermined depth is defined from the distal end of each of the teeth (16a) of the second external gears toward the bottom of each of the teeth (16a) of the second external gears in the tooth width direction thereof.

10. The flexible gear coupling according to any of claims 1 to 9,
characterized in that the elastic bodies (10, 13, 18, 20) are composed of nitrile rubber having a hardness of 60 to 70.

11. The flexible gear coupling according to any of claims 1 to 9,
characterized in that the elastic bodies are composed of leaf springs (21).

## Patentansprüche

1. Flexible Zahnkupplung, die derart angeordnet ist, daß ein Paar von ersten Außenzahnrädern (9a), die mit einem Paar von Ritzeln (9) versehen sind, ballig sind, damit dann, wenn ein Paar von ersten Innenzahnrädern (3a), die entlang derselben Achse von Buchsen (3) angeordnet sind, mit den ersten Außenzahnrädern (9a) kämmen, die ersten Außenzahnräder (9a) sich in der Axialrichtung der ersten Innenzahnräder (3a) um eine vorbestimmte Strecke bewegen sowie zu der Axialrichtung der ersten Innenzahnräder (3a) hin um einen vorbestimmten Winkel neigen können, daß ein Schmiermittel in der Nähe des Bereichs eingefüllt ist, in dem die ersten Innenzahnräder (3a) mit den ersten Außenzahnrädern (9a) kämmen, und daß eine Drehkraft von einer ersten Drehwelle (1), die an dem einen der Ritzel (9) befestigt ist, auf eine zweite Drehwelle (1) übertragen wird, die an dem anderen der Ritzel (9) befestigt ist,
dadurch gekennzeichnet,
daß zweite Innenzahnräder mit einer vorbestimmten Anzahl von ersten Zähnen (9b) an den innenseitigen Umfängen der jeweiligen Ritzel (9) ausgebildet sind,
daß ein Paar von Naben (8) angeordnet ist, an denen zweite Außenzahnräder mit zweiten Zähnen (8a), die den ersten Zähnen (9b) der zweiten Innenzahnräder gegenüberstehen, mit einem vorbestimmten Zwischenraum ausgebildet sind, und an denen die jeweiligen Drehwellen (1) befestigt sind,
und daß elastische Körper (10) zwischen den ersten Zähnen (9b) und den zweiten Zähnen (8a) angeordnet sind.

2. Flexible Zahnkupplung nach Anspruch 1,
dadurch gekennzeichnet,
daß die zweiten Innenzahnräder (9b) und die zweiten Außenzahnräder (8a) Keilprofile sind, die trapezförmige Zähne oder viereckige Zähne haben.

3. Flexible Zahnkupplung nach Anspruch 1 oder 2,
dadurch gekennzeichnet,
daß ein Schlitz (14b, 15c) mit einer vorbestimmten Tiefe an wenigstens einem der ersten Zähne (14a) der zweiten Innenzahnräder und der zweiten Zähne (15a) der zweiten Außenzahnräder von dem distalen Ende von jedem der Zähne (14a, 15a) der Außenzahnräder zu dem Grund von jedem der Zähne hin in deren Zahnbreitenrichtung ausgebildet ist.

4. Flexible Zahnkupplung nach einem der Ansprüche 1 bis 3,
dadurch gekennzeichnet,
daß ein vorbestimmter Zwischenraum zwischen dem distalen Ende von jedem der zweiten Zähne (17a) der zweiten Außenzahnräder und jeder der Zahnnuten der ersten Zähne (9b) der zweiten Innenzahnräder gebildet ist und daß elastische Körper (18) zwischen die ersten Zähne (9b) und die zweiten Zähne (17a) sowie zwischen die distalen Enden der zweiten Zähne (17a) und die Zahnnuten der ersten Zähnen integral eingesetzt sind.

5. Flexible Zahnkupplung nach Anspruch 4,
dadurch gekennzeichnet,
daß Nuten (17b) gebildet sind, um die distalen Enden der zweiten Zähne (17a) der Außenzahnräder in deren Zahnbreitenrichtung diskontinuierlich zu machen, und daß elastische Körper (18) zwischen die ersten Zähne (9b) der zweiten Innenzahnräder und die zweiten Zähne (17a) und in die Nuten (17b) integral eingesetzt sind.

6. Flexible Zahnkupplung nach einem der Ansprüche 1 bis 3,
dadurch gekennzeichnet,
daß ein vorbestimmter Zwischenraum zwischen der Zahnnut (19c) von jedem der zweiten Zähne (19a) des zweiten Außenzahnrads und jedem der distalen Enden der ersten Zähne (8a) der zweiten Innenzahnräder gebildet ist und daß elastische Körper (20) zwischen die ersten Zähne (8a) und die zweite Zähne (19a) sowie zwischen die Zahnnuten (19c) der zweiten Zähne (19a) und die distalen Enden der ersten Zähne (8a) eingesetzt sind.

7. Flexible Zahnkupplung nach Anspruch 6,
dadurch gekennzeichnet, daß Nuten (19c) gebildet sind, um die distalen Enden der ersten Zähne (19b) der zweiten Innenzahnräder in deren Zahnbreitenrichtung diskontinuierlich zu machen, und daß elastische Körper (20) zwischen die zweiten Zähne (8a) der zweiten Außenzahnräder und die ersten Zähne (19b) und in die Nuten (19c) integral eingesetzt sind.

8. Flexible Zahnkupplung, die derart angeordnet ist, daß ein Paar von ersten Außenzahnrädern (2a), die mit einem Paar von Ritzeln (2) versehen sind, jeweils ballig sind, damit dann, wenn ein Paar von ersten Innenzahnrädern (11a), die mit einem Paar von Buchsen (11) versehen sind, jeweils mit den ersten Außenzahnrädern (2a) kämmen, die ersten Außenzahnräder (2a) sich in der Axialrichtung der ersten Innenzahnräder (11a) um eine vorbestimmte Strecke bewegen sowie zu der Axialrichtung der ersten Innenzahnräder (11a) hin um einen vorbestimmten Winkel neigen können, daß ein Schmiermittel in der Nähe des Bereichs eingefüllt ist, in dem die ersten Innenzahnräder (11a) mit den ersten Außenzahnrädern (2a) kämmen, und daß eine Drehkraft von einer ersten Drehwelle (1) an der Seite von dem einen der Ritzel (2) auf eine zweite Drehwelle (1) an der Seite des anderen der Ritzel (2) übertragen wird,
dadurch gekennzeichnet,
daß Flansche (12, 16) vorgesehen sind, an denen zweite Außenzahnräder mit zweiten Zähnen (12a, 16a), die den ersten Zähnen (2a) der Innenzahnräder (2) mit einem vorbestimmten Zwischenraum gegenüberstehen, ausgebildet sind, wobei die Flansche (12, 16) zwischen beiden Buchsen (11) angeordnet sind und elastische Körper (13) zwischen den ersten Zähnen (11a) und den zweiten Zähnen (12a, 16a) angeordnet sind.

9. Flexible Zahnkupplung nach Anspruch 8,
dadurch gekennzeichnet,
daß ein Schlitz (16b) mit einer vorbestimmten Tiefe von dem distalen Ende von jedem der Zähne (16a) der zweiten Außenzahnräder zu dem Grund jedes der Zähne (16a) der zweiten Außenzahnräder hin in deren Zahnbreitenrichtung gebildet ist.

10. Flexible Zahnkupplung nach einem der Ansprüche 1 bis 9,
dadurch gekennzeichnet,
daß die elastischen Körper (10, 13, 18, 20) aus Nitrilkautschuk bestehen, der eine Härte von 60 bis 70 hat.

11. Flexible Zahnkupplung nach einem der Ansprüche 1 bis 9,
dadurch gekennzeichnet,
daß die elastischen Körper aus Blattfedern (21) bestehen.

## Revendications

1. Accouplement flexible à engrenages agencé de façon qu'une paire de premiers engrenages extérieurs (9a) pourvus d'une paire de pignons (9) sont couronnés pour que lorsqu'une paire de premiers engrenages intérieurs (3a) disposés le long du même axe des manchons (3) engrène avec les premiers engrenages extérieurs (9a), les premiers engrenages extérieurs (9a) puissent se déplacer dans la direction axiale des premiers engrenages intérieurs (3a) d'une quantité prédéterminée et s'incliner dans la direction axiale des premiers engrenages intérieurs (3a) suivant un angle prédéterminé, un lubrifiant est introduit au voisinage de la partie où les premiers engrenages intérieurs (3a) engrènent avec les premiers engrenages extérieurs (9a), et une force de rotation est transmise d'un premier arbre de rotation (1) fixé à l'un des pignons (9) à un deuxième arbre de rotation (1) fixé à l'autre des pignons (9), caractérisé en ce que des seconds engrenages intérieurs comportant un nombre prédéterminé de premières dents (9b) sont formés sur les périphéries intérieures des pignons respectifs (9), une paire de bosses (8) est disposée sur lesquelles des seconds engrenages extérieurs ayant des secondes dents (8a) confrontées aux premières dents (9b) des seconds engrenages intérieurs sont formées à un espace prédéterminé et sur lesquelles les arbres de rotation respectifs (1) sont fixés, et des corps élastiques (10) sont interposés entre les premières dents (9b) et les secondes dents (8a).

2. Accouplement flexible à engrenages selon la revendication 1, caractérisé en ce que les seconds engrenages intérieurs (9b) et les seconds engrenages extérieurs (8a) sont des cannelures avec des dents trapézoïdales ou des dents rectangulaires.

3. Accouplement flexible à engrenages selon la revendication 1 ou 2, caractérisé en ce qu'une fente (14b, 15c) d'une profondeur prédéterminée est définie dans au moins l'une des premières dents (14a) des seconds engrenages intérieurs et les secondes dents (15a) des seconds engrenages extérieurs depuis l'extrémité distale de chacune des dents (14a, 15a) des engrenages extérieurs vers le fond de chacune des dents dans le sens de la largeur des dents de ceux-ci.

4. Accouplement flexible à engrenages selon l'une des revendications 1 à 3, caractérisé en ce qu'un espace prédéterminé est défini entre l'extrémité distale de chacune des secondes dents (17a) des seconds engrenages extérieurs et chacune des rainures de dent des premières dents (9b) des seconds engrenages intérieurs, et des corps élastiques (18) sont insérés intégralement entre les premières dents (9b) et les secondes dents (17a) et entre les extrémités distales des secondes dents (17a) et les rainures de dent des premières dents.

5. Accouplement flexible à engrenages selon la revendication 4, caractérisé en ce que des rainures (17b) sont définies pour que les extrémités distales des secondes dents (17a) des engrenages extérieurs soient discontinues dans le sens de la largeur des dents de ceux-ci, et des corps élastiques (18) sont insérés intégralement entre les premières dents (9b) des seconds engrenages intérieurs et les secondes dents (17a) et dans les rainures (17b).

6. Accouplement flexible à engrenages selon l'une des revendications 1 à 3, caractérisé en ce qu'un espace prédéterminé est défini entre la rainure de dent (19c) de chacune des secondes dents (19a) des seconds engrenages extérieurs et chacune des extrémités distales des premières dents (8a) des seconds engrenages intérieurs, et des corps élastiques (20) sont insérés intégralement entre les premières dents (8a) et les secondes dents (19a) et entre les rainures de dent (19c) des secondes dents (19a) et les extrémités distales des premières dents (8a).

7. Accouplement flexible à engrenages selon la revendication 6, caractérisé en ce que des rainures (19c) sont définies pour que les extrémités distales des premières dents (19b) des seconds engrenages intérieurs soient discontinues dans le sens de la largeur des dents de ceux-ci, et des corps élastiques (20) sont insérés intégralement entre les secondes dents (8a) des seconds engrenages extérieurs et les premiers dents (19b) et dans les rainures (19c).

8. Accouplement flexible à engrenages agencé de façon qu'une paire de premiers engrenages extérieurs (2a) pourvus d'une paire de pignons (2), respectivement, soient couronnés pour que lorsqu'une paire de premiers engrenages intérieurs (11a) pourvus d'une paire de manchons (11), respectivement, engrènent avec les premiers engrenages extérieurs (2a), les premiers engrenages extérieurs (2a) peuvent se déplacer dans la direction axiale des premiers engrenages intérieurs (11a) d'une quantité prédéterminée et s'incliner dans la direction axiale des premiers engrenages intérieurs (11a) suivant un angle prédéterminé, un lubrifiant est introduit au voisinage de la partie où les premiers engrenages intérieurs (11a) engrènent avec les premiers engrenages extérieurs (2a), et une force de rotation est transmise d'un premier arbre de rotation (1) sur le côté d'un des pignons (2) à un second arbre de rotation (1) sur le côté de l'autre des pignons (2), caractérisé en ce que des rebords (12,16) sont pourvus sur lesquels des seconds engrenages extérieurs présentant des secondes dents (12a, 16a) qui sont confrontées aux premières dents (2a) des engrenages intérieurs (2) à un espace prédéterminé sont formés, lesdits rebords (12, 16) étant interposés entre les deux manchons (11), et des corps élastiques (13) sont interposés entre les premières dents (11a) et les secondes dents (12a, 16a).

9. Accouplement flexible à engrenages selon la revendication 8, caractérisé en ce qu'une fente (16b) d'une profondeur prédéterminée est définie depuis l'extrémité distale de chacune des dents (16a) des seconds engrenages extérieurs vers le fond de chacune des dents (16a) des seconds engrenages extérieurs dans le sens de la largeur des dents de ceux-ci.

10. Accouplement flexible à engrenages selon l'une des revendications 1 à 9, caractérisé en ce que les corps élastiques (10, 13, 18, 20) sont réalisés en caoutchouc nitrile d'une dureté de 60 à 70.

11. Accouplement flexible à engrenages selon l'une des revendications 1 à 9, caractérisé en ce que les corps élastiques sont constitués de ressorts à lames (21).
